# EUROPEAN PATENT APPLICATION

(11) **EP 1 215 611 A1**
(43) Date of publication of application: **19.06.2002**
(21) Application number: 01904417.1
(22) Date of filing: 14.02.2001
(51) Int. Cl.: G06F 17/60

(54) **COLLECTING METHOD BY INFORMATION PROCESSOR, AND ORDERING METHOD OR SALE METHOD**

(30) Priority: 14.02.2000 JP 2000035937; 14.02.2000 JP 2000035938
(71) Applicant: CANON KABUSHIKI KAISHA, Ohta-ku Tokyo 146-8501 (JP)
(72) Inventor: SHIBA, Rikio, Kawasaki-shi, Kanagawa 211-0007 (JP); NAGATSUKA, Takayuki, Kawasaki-shi, Kanagawa 211-0025 (JP); SHIMIZU, Yukihiko, Urayasu-shi, Chiba 279-0043 (JP)
(74) Representative: Böckelen, Rainer
(86) International application number: JP0101018
(87) International publication number: WO0159638

(57) **Abstract**

Collection methods of toner cartridges involve stores or manufactures dispatching recovery vehicles, users taking toner cartridges to stores, or users sending toner cartridges by packing them in special boxes, but all these methods are troublesome and costly. To deal with this situation, an ordering screen provided to the user who orders goods via an Internet contains an entry field for specifying whether to use a collection service for the goods to be ordered. When this field is filled in and the information as to whether to use the collection service is transmitted, a main server calculates expected collection quantities based on the transmitted information and then draws up collection plans based on the calculated information.

## Description

### Technical Field

The present invention relates to a collection method, ordering method, sales method or sales system, information processing apparatus, collection method or sales method using information processing apparatus, and program and medium therefor. For example, it relates to ordering, sales, and collection of office consumables such as toner cartridges.

### Background Art

Printers, copiers, and facsimile machines using electrophotography are essential tools in conducting business. These electrophotography-based machines need consumables such as toner. If they run out of consumables and are not replenished quickly, they will be rendered unusable. To avoid such situations, offices maintain proper inventory of consumables. Recently, there have been companies that create a post called an IMS (Information Manager of Systems) to maintain proper inventory of consumables on a company-wide basis.

Some electrophotography-based machines are supplied with toner by means of a cartridge called a toner cartridge. Each machine should be fitted with a toner cartridge according to its type. Printers generally require different toner cartridges if they differ in type although they are all printers. Therefore, offices and business places which use many types of machine must keep many types of toner cartridge in stock. Proper inventory levels must be maintained not only for toner cartridges, but also for all the office goods used in offices and business places. Hereinafter, commodities such as toner cartridges may be referred to as "office consumables." In addition to toner cartridges, office consumables include copier toners, photoconductive drums, ink-jet printer ink, other service parts, paper, OHP sheets, etc.

Toner cartridges themselves are made of recyclable materials. In addition to containing toner, toner cartridges may be equipped with a mechanism for supplying toner to electrostatic latent images on the photoconductive drum or they may contain the photoconductive drum itself. Thus, in order to recycle such materials and parts, it is desirable that used toner cartridges be collected efficiently.

There are certain demands concerning the sales style, inventory control, and recycling of office consumables with such characteristics:

### [Sales style]

With the widespread proliferation of the Internet, people wish to use an Internet in sales and ordering of office consumables. Although there are already systems that sell goods using the Internet, it is not easy to select and order office consumables compatible with the equipment used, from among a great variety of goods. Besides, the prices of goods listed by such sales systems do not deal with each customer individually.

### [Inventory control]

Manufacturers and stores which supply and sell office consumables according to the equipment used carry considerably large inventories of office consumables in their warehouses out of the necessity to provide office consumables to customers in a short period. However, due to a great variety of office consumables and difficulty of demand forecasting, it cannot be said that proper inventory is maintained. Consequently, there are cases in which office consumables ordered by customers are out of stock while geographically distant stores carry excessive inventory. In such cases, although it is possible to supply the customers the office consumables from stores with excessive inventory, it is quite impossible to deliver them in a short period because the customers are located outside normal delivery areas. Thus, there is demand for inventory control which takes into consideration the great variety of office consumables and difficulty of demand forecasting.

### [Recycling]

In order to collect and recycle toner cartridges effectively, it is desirable that manufacturers and recyclers know what types of toner cartridge will be returned, when and in what quantities. This allows manufacturers and recyclers to collect and recycle used cartridges efficiently at low costs according to schedule.

As things stand now, however, only the question as to whether to recycle toner cartridges is determined by users when the toner cartridges have been used, and thus a proper environment is yet to be established for effective, low-cost collection and recycling. Besides, current collection methods of toner cartridges involve (1) stores or manufactures dispatching recovery vehicles, (2) users taking toner cartridges to stores, or (3) users sending toner cartridges by packing them in special boxes, but all these methods are troublesome and costly. Also, since recycling information is not managed, manufactures and recyclers of toner cartridges draw up recycling schedules based on past performance in collection and recycling. Consequently, results can differ greatly from expectations.

Under these circumstances, manufactures and recyclers that should play an important role in recycling are carrying out recycling activities passively, and recycling is actually supported by the efforts of users and stores. It seems that many used toner cartridges are discarded to avoid the labor and cost of collection. Thus, there is demand for a collection system which can reduce the labor and cost of collection.

### Disclosure of Invention

The present invention intends to solve the above problems individually or collectively and its object is to centrally control circulation of office consumables.

To attain this object, a preferred embodiment of the present invention discloses a collection method of logging in to a designated server and specifying collection of office consumables according to a screen supplied by the above described server, characterized in that the above described screen contains an item for ordering office consumables, and an item for specifying whether to use collection of used office consumables.

The preferred embodiment of the present invention also discloses an ordering method of allowing the user to log-in to a designated server and ordering desired office consumables according to an ordering screen supplied by the above described server, characterized in that the above described screen contains a list of office consumables compatible with the equipment used by an orderer.

The preferred embodiment of the present invention also discloses a collection method which comprises a sending step of sending display screen information to a terminal connected via a communications line, the above described display screen information containing an input field for entering ordering information of goods and an input field for specifying whether the above described goods be collected.

The preferred embodiment of the present invention also discloses a sales method of using an information processing apparatus which manages information about users' equipment and is connected to a plurality of terminals via communications lines, characterized in that the above described sales method comprises an identification step of identifying the equipment owned by a user based on information specific to the above described user received from one of the above described terminals, and a generation step of generating display screen information for displaying the equipment owned by the user identified in the above described identification step.

The preferred embodiment of the present invention also discloses a sales method which comprises a receiving step of receiving ordering information sent via the Internet; and a judgment step of judging, based on inventory information of the warehouse from which the goods identified by the above described ordering information can be transported in the shortest period corresponding to geographical information of the orderer identified by the above described ordering information, whether the above described goods can be shipped from the above described warehouse.

The preferred embodiment of the present invention also discloses a sales method which comprises a sending step of sending display screen information to a terminal connected via a communications line, the above described display screen information containing goods identified by information entered by a user via an ordering screen, and an input field for specifying whether the above described goods be collected.

Other features and advantages of the present invention will become apparent from the following description taken in conjunction with the accompanying drawings.

### Brief Description of Drawings

FIG. 1 is a diagram illustrating the conventional flow of toner cartridges;
FIG. 2 is a diagram showing the flow of toner cartridges according to this embodiment;
FIG. 3 is a diagram showing an example configuration of a sales and collection system of toner cartridges;
FIG. 4 is a diagram showing an example of ordering sequence for toner cartridges;
FIG. 5 is a diagram showing an example of screens displayed on the user's terminal at the time of ordering toner cartridges;
FIG. 6 is a diagram showing an example of screens displayed on the user's terminal at the time of ordering toner cartridges;
FIG. 7 is a diagram showing an example of screens displayed on the user's terminal at the time of ordering toner cartridges;
FIG. 8 is a diagram showing an example of screens displayed on the user's terminal at the time of ordering toner cartridges;
FIG. 9 is a diagram showing an example of screens displayed on the user's terminal at the time of ordering toner cartridges;
FIG. 10 is a flowchart showing an example of order processing;
FIG. 11 is a flowchart showing an example of shipment processing based on order receipt information;
FIG. 12 is a flowchart showing an example of collection processing based on order receipt information;
FIG. 13 is a schematic diagram showing an example configuration of a laser beam printer;
FIG. 14 is a schematic diagram showing an example configuration of an ink-jet printer;
FIG. 15 is a block diagram showing a typical configuration of a computer;
FIG. 16 is a diagram showing a form of processing by a main server;
FIG. 17 is a diagram showing a form of generation processing of display screen information by the main server;
FIG. 18 is a diagram showing an example of screens displayed on the user's terminal;
FIG. 19 is a diagram showing a form of generation processing of display screen information by the main server;
FIG. 20 is a diagram showing how information is stored and managed through collaboration between a shared DB and the main server;
FIG. 21 is a diagram showing a form of recycling schedule information generated by the main server;
FIG. 22 is a diagram showing a form of main server processing; and
FIG. 23 is a diagram showing a form of recycling schedule information generated by the main server.

### Best Mode for Carrying Out the Invention

A sales and collection system of office consumables according to the present invention will be described in detail below with reference to the drawings. Incidentally, although toner cartridges used for electrophotography-based printers, copiers, facsimile machines, and other machines, are cited as an example of office consumables in the description of embodiments, the present invention can be applied to other types of goods, which include, for example, copier toners, consumable parts, paper or OHP sheets, ink-jet printer ink, etc. Here, the term "consumable parts" means parts expended in a shorter period of time than the main unit, such as photoconductor drums, photoconductor units, replacement lamps, and fuser rollers of image forming apparatus such as copiers and printers. It is desired that empty containers of many of these consumable parts be collected. Regarding copier toner, for example, the containers and packing boxes of toner are desired to be collected.

### [Flow of toner cartridges]

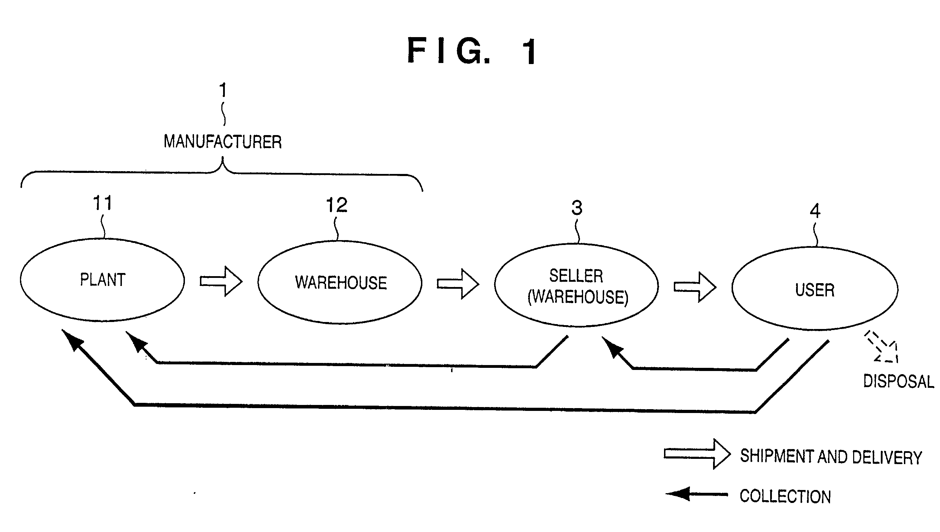

FIG. 1 is a diagram illustrating flow of toner cartridges.

In FIG. 1, toner cartridges produced at a factory 11 of a manufacturer 1 according to a production plan are sent to a warehouse 12 of the manufacturer as needed. When an order is received by the manufacturer 1 from a seller 3, it may take a lot of days to make a delivery to the seller 3 (or seller's warehouse). The seller 3 can make a delivery to a user 4 in a day (on the day after the order) at the latest as long as the ordered goods are in stock.

On the other hand, there is no established route for collection of used toner cartridges. As described above, there are various routes including a route via the seller 3 and direct route from the user 4 to the manufacturer 1. Also, it seems that many used toner cartridges are uncollected due to the problem of labor and cost involved in collection.

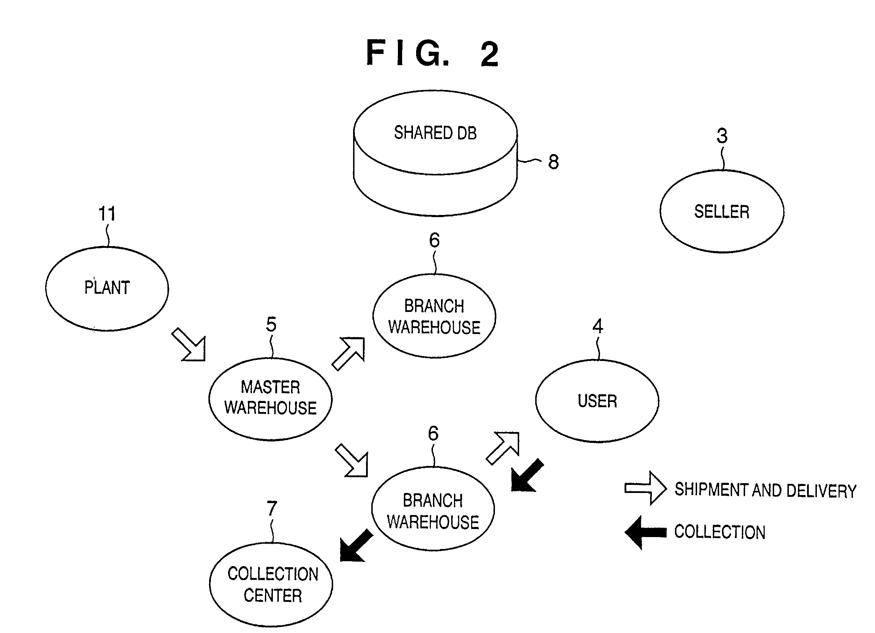

FIG. 2 is a diagram showing the flow of toner cartridges according to this embodiment.

In FIG. 2, toner cartridges produced at the factory 11 of the manufacturer 1 according to a production plan are sent to a master warehouse 5 of the manufacturer as needed. The toner cartridges are placed in the master warehouse 5, and then distributed to branch warehouses 6 scattered over various locations according to a shipment schedule described later. Although details will be described later, when an order is received from the user 4, toner cartridges are delivered from a branch warehouse 6 to the user 4. At the time of delivery, used toner cartridges are collected according to the user's 4 wishes and placed temporarily in a branch warehouse 6 or the master warehouse 5, but details will be described later. Later, the used toner cartridges placed in the branch warehouse 6 or master warehouse 5 are sent to a collection center 7 from the branch warehouse 6 or master warehouse 5 at a designated time and recycled there.

The master warehouse 5 shown in FIG. 2 is the primary warehouse central to the flow of toner cartridges and is operated by the manufacturer 1, the seller 3, a distributor, or the like. It is desirable that the branch warehouses 6 which serve as contact points with the user 4 should be operated by distributors. The collection center 7 which is a center of recycling is operated by the manufacturer 1 or a recycler.

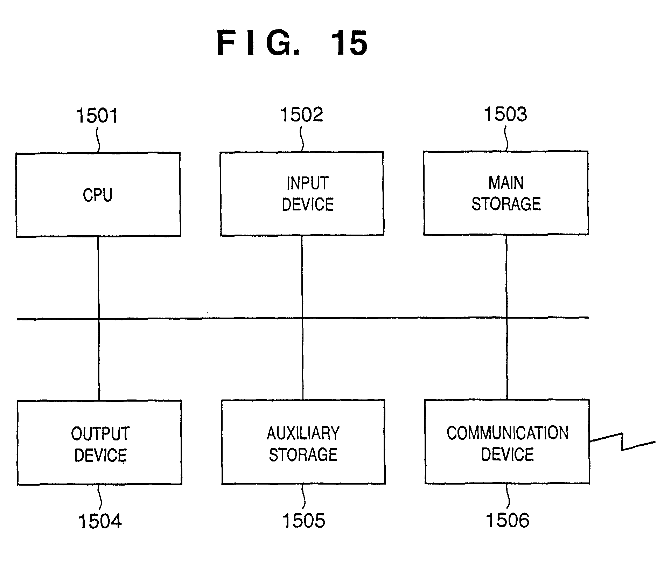

A shared database (DB) 8 centrally controls physical distribution which includes production at the factory 11; inventories in the master warehouse 5 and branch warehouses 6; orders by the user 4; and collection carried out among the factory 11, master warehouse 5, branch warehouses 6, user 4, and collection center 7. The central control by the use of the shared DB 8 is aimed at realizing proper production, inventory, and physical distribution, at enabling, for example, next day delivery of the toner cartridges ordered by the user 4, at ensuring that collected toner cartridges will be delivered to the collection center 7 in the right quantities at the right time, and so on. The information provided by the shared DB 8 corresponds to information stored in an auxiliary storage 1505 in FIG. 15, described later.

Incidentally, the seller 3 may not participate in the flow of toner cartridges itself, but does participate in data flow in the sales and collection system, described later.

Implementing a flow of toner cartridges such as the one shown in FIG. 2 into a system ensures that toner cartridges will be available to users in a short period. This makes it easy to maintain the inventories of various toner cartridges at offices and business places which use various types of printer, copier, and facsimile machine. Furthermore, in the case of small offices and business places, a toner cartridge may be ordered when prompted by a printer or the like to replace the toner cartridge after the remaining quantity of toner falls below a certain threshold. This eliminates the need for inventory control itself.

In other words, by collectively controlling the production, physical distribution, inventory, order receipts, and distribution of a great variety of toner cartridges, it is possible to adjust the inventory of toner cartridges between the master warehouse 5 and branch warehouses 6 according to production and order receipts. Therefore, toner cartridges can be supplied to the user 4 in a short period even if the warehouse of the seller 3 or the like is not stocked with office consumables. This solves problems caused by excessive inventory or zero inventory carried by the seller 3 and removes increased interest burdens due to excessive inventory.

Besides, by using the shared DB 8, the collection center 7 can estimate future collection of toner cartridges based on the quantities of toner cartridges currently being used, purchase dates, number of users registered for collection programs, etc. This estimation makes it possible to keep track of what types of toner cartridge will be returned, when and in what quantities. If collection-completed information, which is sent from the terminals of collectors (delivery agents) when toner cartridges are actually collected from users, is received and grasped by a main server 81, it is possible to plan a more accurate collection and recycling schedule of used cartridges. Consequently, used cartridges can be collected and recycled efficiently at low cost through aggressive recycling activities. Details will be described later.

Furthermore, since the labor and cost of recycling used toner cartridges can be minimized, it is possible to prevent disposal of used toner cartridges, resulting in an increased collection rate. This makes it possible to build environmentally friendly collection system and recycling system.

The sales and collection system which implement the flow of toner cartridges shown in FIG. 2 will be described below.

### [Sales and collection system]

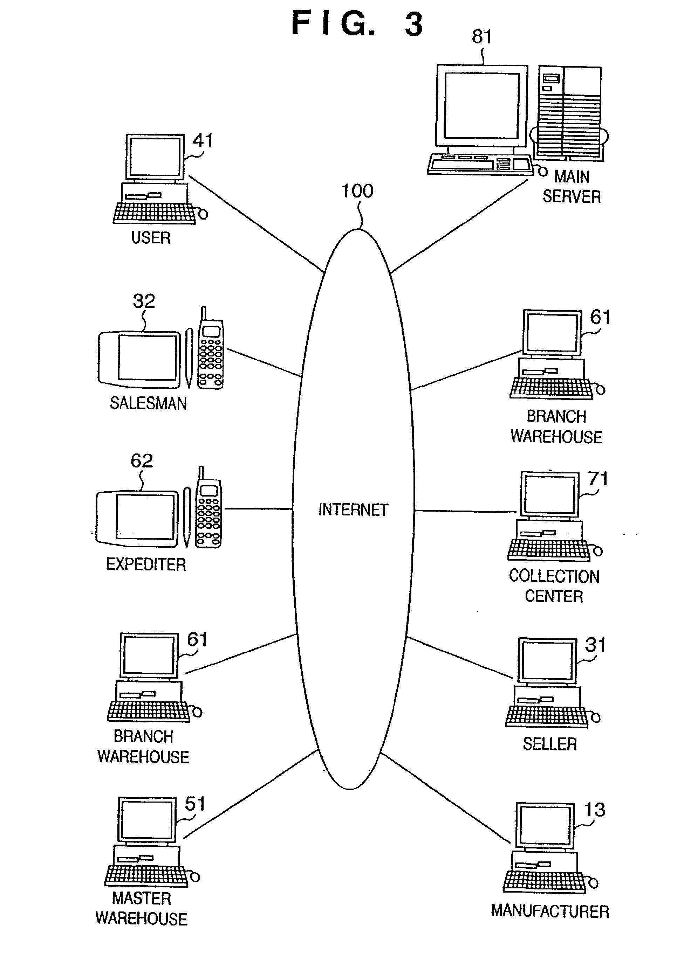

FIG. 3 is a diagram showing an example configuration of the sales and collection system of toner cartridges.

The main server 81 provides the shared DB 8. Incidentally, the shared DB 8 is not necessarily provided by a single server. It may be split among two or more servers or provided in parallel by two or more servers. In short, the shared DB 8 needs to be provided as a single database only logically.

The main server 81 is connected via a wide area network (WAN) 100, such as the Internet, with a plurality of terminals which use the shared DB 8. Terminals 13, 31, 41, 51, 61, and 71 belong to the manufacturer 1, seller 3, user 4, master warehouse 5, branch warehouses 6, and collection center 7, respectively. A terminal 32 is a mobile terminal used by a salesman or serviceman of the seller 3 while a terminal 62 is a mobile terminal used by an expediter of a distributor. The mobile terminals used by salesmen or servicemen serve the purpose of the present invention as long as they have the same configuration/functions as the terminal 41.

Now, the internal structure of the main server 81 shown in FIG. 3 will be described with reference to FIG. 15, which is an internal block diagram of the main server 81. As shown in FIG. 15, the main server 81 comprises a CPU 1501, an input device 1502, a main storage 1503, an output device 1504, the auxiliary storage 1505, and a communications device 1506.

The CPU 1501, which is a member known under the alias of a processor, has a control function of sending commands to various devices in the system and controlling their operations and a function of performing arithmetic processing of digital data in the central part of the server.

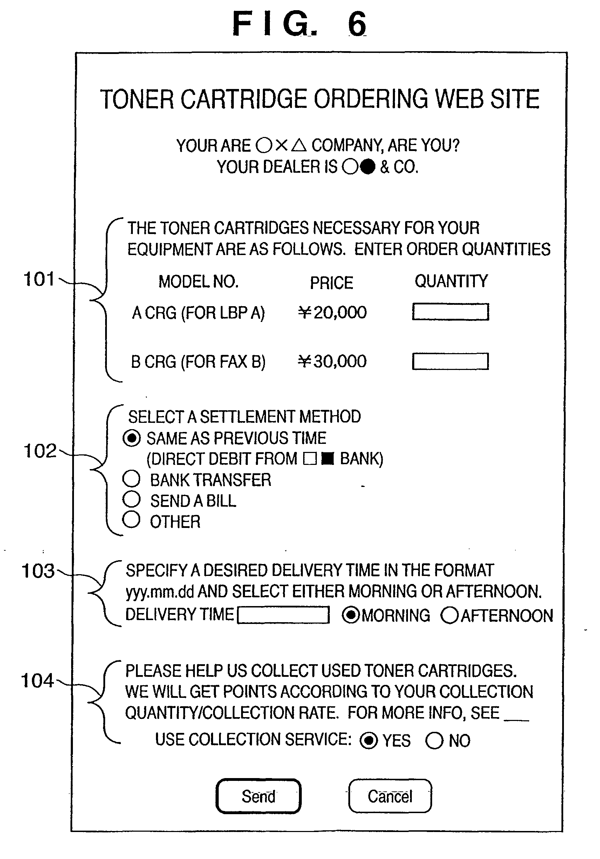

The input device 1502, which is used to enter various data, may be, for example, a keyboard, mouse, pointing device, touch panel, mouse pad, CCD camera, card reader, paper tape reader, or magnetic tape reader. If instruction data is entered, for example, on an interface screen in FIG. 6 using an output device such as a mouse, the CPU 1501 recognizes the entered information and performs a process which will transfer the CPU 1501 to a next process.

The main storage 1503, which is a member known under the alias of a memory, includes all the addressable space, in processors and internal storage units, used to execute commands. The main storage 1503 consists mainly of semiconductor elements. It stores and retains inputted programs and data and reads them to a register under instructions from the CPU 1501.

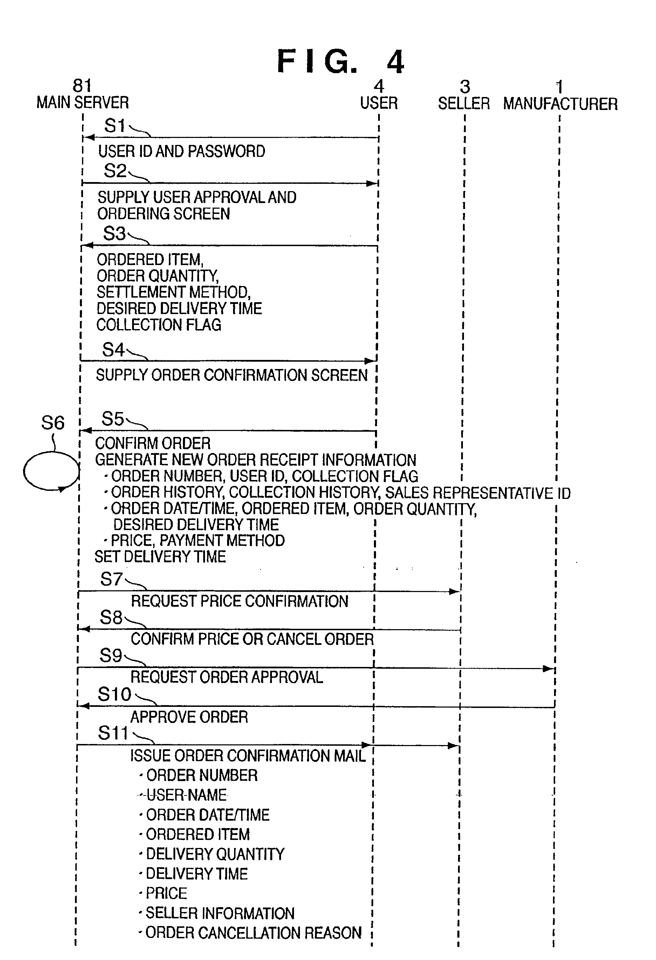

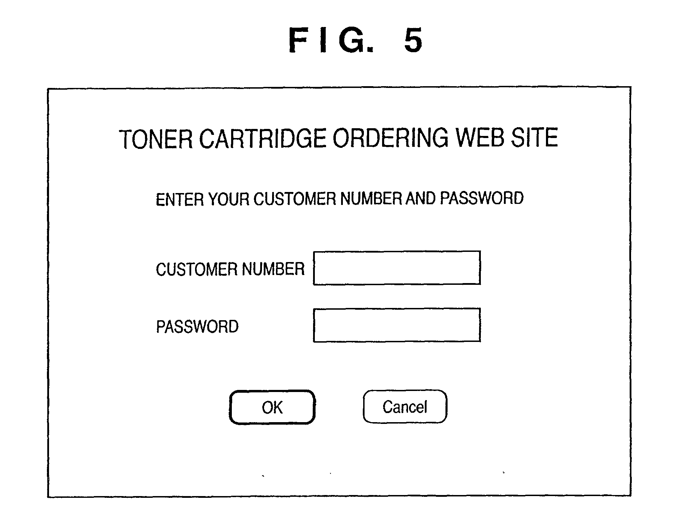

The semiconductor elements composing the main storage 1503 may be RAM (Random Access Memory) or ROM (Read Only Memory). ID and password information entered via a user interface in FIG. 5, for example, is stored temporarily in the main storage 1503 and then sent by the CPU 1501 via the communications device 1506 (S1 in FIG. 4). The main storage 1503 also functions as display memory for displaying the user interface in FIG. 5.

The output device 1504, which is a member for outputting computational results of the CPU 1501, may be a CRT, plasma display panel, liquid crystal display, other display, printing device such as a printer, audio output device, etc. According to the present invention, the display apparatus of each terminal in FIG. 3 corresponds to the output device 1504.

The auxiliary storage 1505, which supplements the storage capacity of the main storage 1503, may be a floppy disk, CD-ROM, CD-R, CD-W, MO, DVD, or the like driven by a magnetic disk drive, optical disk drive, semiconductor disk drive, or the like. The auxiliary storage 1505 implements the function of a database. It corresponds, for example, to the shared DB 8 according to the present invention. It also has the function of storing programs as is the case with the main storage.

The communications device 1506, which is a device for communication with external networks, sends and receive data, carries out digital-analog conversion, etc. depending on the connected network. According to the present invention, transmission of data in steps in FIG. 4, for example, is carried out via the communications device 1506 under the control of the CPU 1501.

The devices described above, are interconnected via an address bus or data bus and are used for two-way communications of various data.

The explanation of the step of each flowchart according to this embodiment and the processes described with reference to various drawings are carried out as the CPU 1501 executes the control of various devices according to various program code stored in the main storage 1503 or auxiliary storage 1505.

It is assumed that the terminal 41, terminals 13, 31, 41, 51, 61, and 71, terminal 32, and mobile terminal 62 shown in FIG. 2 have the same configuration as in FIG. 15.

### [Shared database]

The shared DB 8 contains databases and their field information as illustrated below by an example. The information stored in the shared DB 8 is also stored in the auxiliary storage 1505 in FIG. 15. The information stored in the shared DB is provided to an auxiliary storage of each terminal shown in FIG. 3 and stored there. Also, the information is updated by the CPUs mounted in the terminals. Incidentally, the databases and their fields shown below may be deleted or new ones may be added depending on the users and characteristics of office consumables handled by the sales and collection system.
- Seller information database
   Seller ID and password
   Name, address, telephone number, and facsimile number
   E-mail address
   Customer representative information
   Sales performance information
   Collection performance information
   Inventory information
- Warehouse information database
   Master warehouse information
   Branch warehouse information
   Master-branch connection information
   Warehouse-specific inventory information

The master warehouse information and branch warehouse information include the locations of the warehouses, etc. The master-branch connection information includes information about the time required to deliver goods from the master warehouse 5 to the branch warehouses 6 and the time required to deliver goods between the branch warehouses 6, etc. The warehouse-specific inventory information includes the proper inventories of individual warehouses, etc.

Based on this information, the main server 81 can control inventory transfers from the master warehouse 5 to the branch warehouses 6 and division of delivery operations among the branch warehouses 6. Besides, if toner cartridges ordered by the user 4 are not available in nearby branch warehouses 6, the main server 81 can also control inventory transfers so that toner cartridges can be delivered within the period desired by the user 4 or in the shortest possible period.
- Product information database
   Product name and model number
   Related consumables
   Product-specific inventory information
   Product-specific sales and collection period
   Price information

The product name and model number information indicates the product name and model number of the main unit. The related consumables refer to information stored/managed, being associated with the main unit which uses the consumables. The product-specific sales and collection is information about the average period (time) from the time when each product containing consumables are sold (delivered to the user and started to be used) to the time when the consumables are collected. The average is calculated based on past data or the like. The price information is also associated with product names and model numbers as well as with related consumables. It indicates the prices for model numbers and related consumables.
- Customer information database
   User ID and password
   Name, address, telephone number, and facsimile number
   E-mail address
   Sales representative, salesman, and serviceman
   Nearby branch warehouse #1
   Nearby branch warehouse #2
   Name (model number) and quantity of purchased product
   Order history
   Collection flag
   Collection history
   Payment history
   Price information

The collection flag indicates whether the user wants to use collection service, which will be described later. It is set via a user interface shown in FIG. 6. If this collection flag is set to "Use collection service," the collection service will be provided continuously for the consumables or the like purchased by the user. The present invention may provide a mechanism which will allow the user to set this flag for each order or each product. If the user can set the collection flag (whether to use collection service) for each order and each product, it is possible to implement a collection service which can accommodate users' wishes for collection more flexibly.
- Shipment information database
   Customer information
   Status
   Order number
   Order date/time
   Ordered item
   Delivery time
   Price
   Payment method
   Shipment date/time
   Shipment arrival date/time
   Receiving inspection date/time
- Collection information database
   Collection source customer information
   Collection number
   Collection date/time
   Collected item
   Expected delivery date/time at collection center
   Delivery date/time
   Actual collection quantity
   Expected collection quantity
   Definite collection quantity
   Number of recycling plans
- Manufacturer, seller information, distributor information
   Manufacturer ID and password
   Seller ID and password
   Salesman ID and password
   Serviceman ID and password
   Warehouse ID and password
   Expediter ID and password

### [Ordering sequence and screen]

FIG. 4 is a diagram showing an example of an ordering sequence for toner cartridges. FIGS. 5 to 9 are diagrams showing examples of screens displayed on the terminal 41 of the user 4 when ordering toner cartridges. The processes of the steps in the flowchart of FIG. 4 are carried out as the CPU 1501 executes processes based on the program code stored in the main storage or auxiliary storage of the terminal 41.

First, the user 4 accesses the main server 81 via the terminal 41. Specifically, the user 4 specifies the URL (Uniform Resource Locator) of the main server 81 using a Web browser or other software running on the terminal 41. In response, the main server 81 supplies data (hereinafter referred to as "HTML data") written in HTML (HyperText Markup Language) and corresponding to a log-in screen to the terminal 41, whose monitor then displays the log-in screen shown in FIG. 5

Incidentally, according to the present invention, to supply or provide data/information means for sending data/information. For example, the act of providing or supplying data/information from the main server 81 to the terminal 41 and the act of providing or supplying data/information from the terminal 41 to the main server 81 include a sending process of data/information by communications means installed in the equipment.

In Step S1 shown in FIG. 4, the user 4 enters his/her user ID which corresponds to his/her customer number, enters his/her password, and then presses an [OK] button to inform the main server 81 of the user ID and password. That is, the user ID and password are sent from the terminal 41 to the main server 81 according to the instructions entered by the user. Incidentally, it is assumed that each user (office or business place) of a printer has been informed of a user ID and password by the seller 3. The present invention also allows for a form in which the main server 81 informs the terminal 41 of the user ID and password.

When informed of the user ID and password by the terminal 41, the main server 81 judges in Step S2 whether a user who corresponds to the user ID and password exists, by referencing the customer information database. The fact that the customer information database is referenced by the main server 81 means that the customer information database is referenced. If it is judged that a corresponding user exists, the main server 81 approves the user, generates HTML data which corresponds to an ordering screen, and supplies it to the terminal 41. When the terminal 41 receives the supplied ordering screen information, its monitor displays the ordering screen shown in FIG. 6.

The ordering screen shown in FIG. 6 is a display example of the display information sent from the main server to the terminal 41 in Step S2 in FIG. 4. It consists mainly of a toner cartridge list 101 compatible with the equipment used by the user, settlement method selection section 102, delivery time specification section 103, and collection service registration section 104 for used toner cartridges. Regarding the delivery time specification section 103, it is desirable that a pull-down menu form should be used so that the part enclosed in [] pulls down to allow the user to specify a business day excluding holidays. In that case, a message should be displayed stating: "Select a desired delivery time from the pull-down menu and then select either morning or afternoon."

### Example: Delivery time: year [2000] month [2] day [14]

### ● Morning ○ Afternoon

The list 101 contains model numbers of toner cartridges, model numbers of corresponding machines, price information, which are displayed together with input fields for entering an order quantity for each toner cartridge model number. Although FIG. 6 shows only two toner cartridge models, actually the main server 81 takes measures to list all toner cartridge model numbers compatible with each of the machines including printers, copiers, facsimile machines, etc. used by the user.

The possible cases in which a display such as the one shown in FIG. 6 is provided include, for example, when (1) the user has not yet registered for the collection service, (2) the user has registered for the collection service, but wants to cancel the registration, or (3) the user wants to decide whether to use the collection service, separately for each order or each product.

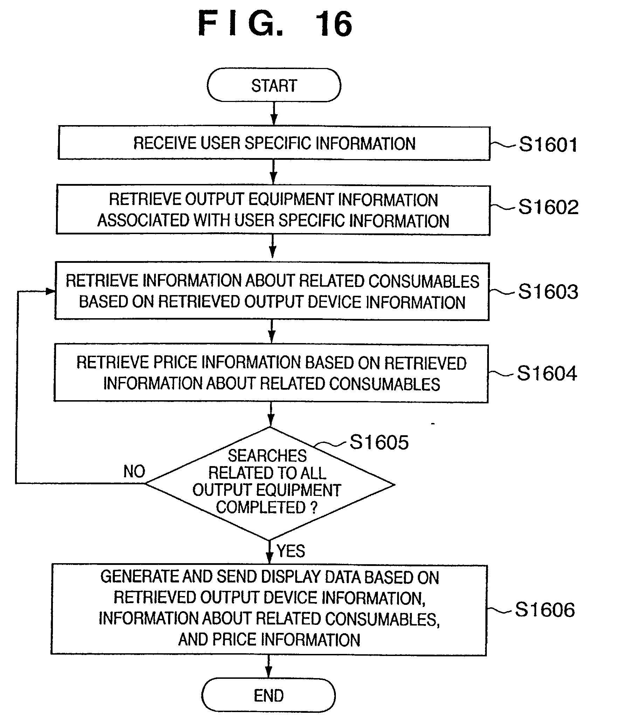

FIG. 16 shows one possible flowchart which represents detailed process of displaying the information of the list 101 on a display unit of the terminal 41. The processes of the steps in the flowchart of FIG. 16 are carried out as the CPU 1501 executes processes based on the program code stored in the main storage or auxiliary storage of the main server 81. These processes are performed through collaboration between the DB 8 storing various data and the main server 81.

In S1601, the main server 81 receives user specific information from the terminal 40. This user specific information corresponds to the user ID and password described in relation to S1 in FIG. 4. Also, user specific information must allow a given user to be identified.

In S1602, output equipment information managed in relation to the user specific information received in S1601 is searched for and search result information is retrieved.

In S1603, based on the retrieved output device information, information about consumables related to the output devices is searched and search result information is retrieved. The information about related consumables here refers to information about toner cartridges, ink cartridges, photoconductor drums etc. which are available for the given output devices. Also, even if consumables for a device have been changed for some reason, the user does not need to be aware of the model numbers of the consumables for the device he/she possesses, provided the changed model numbers are stored in the database, being associated with the output device information.

In S1604, price information which corresponds to the retrieved output device information is searched for. In S1605, it is judged whether consumables information and price information have been searched in relation to all the equipment registered and managed for each user ID. If the answer is "No," the processes of S1603 and S1604 are repeated.

On the other hand, if it is judged in S1605 that information about related consumables and price information corresponding to all the output equipment have been retrieved and obtained, display data is generated and sent in S1606, based on the retrieved output device information, information about related consumables corresponding to the output device information, and price information corresponding to the information about related consumables. The information generated by the main server 81 in S1606 is intended to be sent to the terminal 41 and displayed there.

The collection service registration section 104 is intended for the user to indicate whether to use the collection service of used toner cartridges. If the user wants to use the collection service and indicates it, used toner cartridges are collected at the time of the above-mentioned delivery of toner cartridges. Details will be described later.

Furthermore, if the user expresses his/her intention to use the collection service as described above, a pair of shipping and collection tickets (shipping/collection ticket) are issued by the main server 81. The issued ticket is attached to a packing box of the toner cartridges delivered to the user. The user keeps the box with the ticket attached, and uses it to put used toner cartridges at the time of collection. The use of the shipping/collection ticket saves labor at the time of collection, for example, sparing the user the trouble of issuing a new ticket and the expediter the trouble of data entry. Also, since shipment and collection are managed by the same ticket number or the like, the collection rate for each user can be managed easily, and so forth.

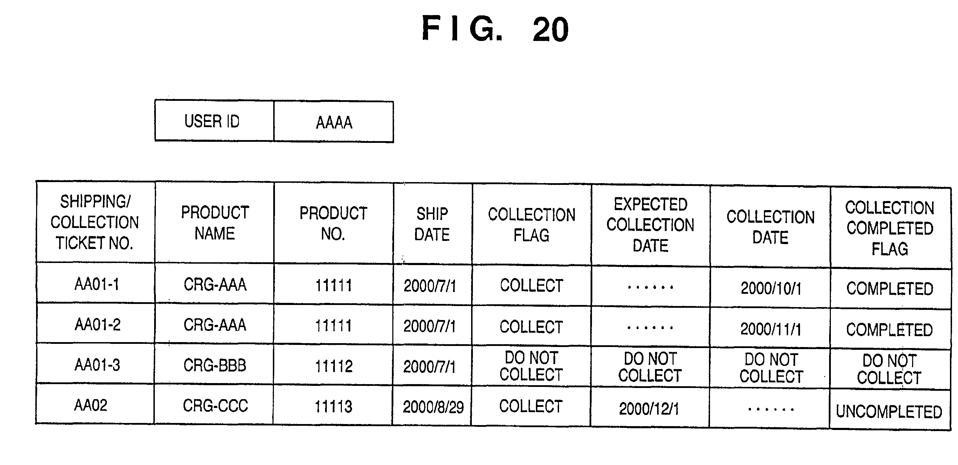

The ticket numbers for the tickets issued by the main server 81 are generated by the main server 81. They are associated with user IDs and stored and managed through collaboration between the DB 8 storing various data and the main server 81. Details will be described later with reference to FIG. 20.

After filling in the fields on the ordering screen, the user presses a [Send] button. When information about the press of the button is entered in the terminal 41, ordered items and order quantity data which correspond to the list 101, settlement method data which corresponds to the selection section 102, data about the desired delivery date which corresponds to the specification section 103, and a collection flag which corresponds to the collection service registration section 104 is sent from the terminal 41 to the main server 81 in Step S3.

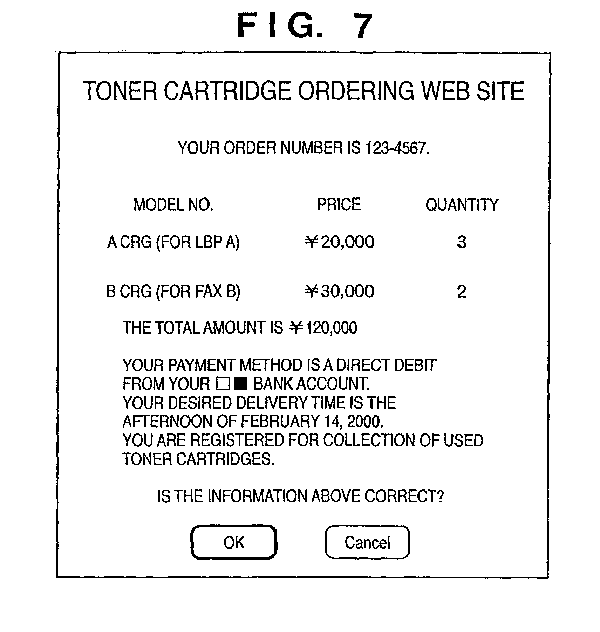

Next, in Step S4, based on the received data and flag, the main server 81 generates HTML data which corresponds to an order confirmation screen and supplies the generated data to the terminal 41. Consequently, the monitor of the terminal 41 displays the order confirmation screen shown in FIG. 7. The content of the screen shown in FIG. 7 is the one which is displayed if the user has expressed his/her intention to use the collection service. If the user does not intend to use the collection service, the content of the screen will be changed to a message such as "I will not use the collection service of used toner cartridges." Such message information is generated by the main server 81.

If the order details, collection service registration information, etc. displayed on the order confirmation screen are correct, the user 4 presses an [OK] button in Step S5. Order confirmation information entered according to either the [OK] or [Cancel] button pressed by the user is sent from the terminal 41 to the main server 81 in Step S5. If there is a mistake or something the user want to correct, the user presses the [Cancel] button. If the [Cancel] button is pressed, the monitor of the terminal 41 displays the ordering screen again.

Upon receiving the order confirmation information, the main server 81 generates information which indicates a new order receipt. This information contains order number, user ID, collection flag, order history, collection history, sales representative ID, order date/time, ordered item, order quantity, desired delivery time, price, payment method, and other data.

Next, the main server 81 calculates and checks the delivery time using the customer information database and warehouse information database. Specifically, the main server 81 checks the nearby branch warehouse #1 and #2 fields associated with the user ID, checks the warehouse-specific inventory information field to see whether the branch warehouses 6 are stocked with the ordered items in quantities sufficient to meet the order quantity, and sets the delivery time based on the results of checks. Normally, if the branch warehouses 6 registered in the nearby branch warehouse #1 and #2 fields carry inventory, a delivery can be made on the next day. If the branch warehouses 6 do not carry inventory, the main server 81 determines and sets the delivery time using the warehouse information database.

Next, in Step S7, the main server 81 sends the above-mentioned order receipt information to the terminal 31 of the seller 3 in charge of the user 4 by attaching a price confirmation request. This is because the delivered price, which is set and entered in the terminal 31 by the seller 3, varies depending on the conditions of trade with the user, and thus it should be confirmed. The price confirmation request is processed immediately by software running on the terminal 31 of the seller 3, and in Step S8, price confirmation, order cancellation, or other information is returned from the terminal 31 to the main server 81. Alternatively, the price confirmation request is sent to the portable terminal 32 of the salesman in charge of the user and in Step S8, price confirmation, order cancellation, or other information is returned to the main server 81 via the portable terminal 32 by the salesman.

Upon receiving the price confirmation, the main server 81 sends (transmits) ordering information to the terminal 13 of the manufacturer 1 immediately in Step S9 by attaching an order approval request. The order approval request is processed immediately by software running on the terminal 13 of the manufacturer 1 or by the operator who manages the terminal 13. In Step S10, normally an order approval is returned (transmitted) by the terminal 13 to the main server 81. If information indicating cancellation of the order is received because of a mistake in price, the status of the corresponding order receipt information is changed, for example, to "Cancelled."

Next, in Step S11, if the main server 81 receives an order approval, it generates e-mail indicating the order approval, and sends it to the terminal 41 of the user 4 and terminal 31 of the seller 3. This e-mail contains information such as order number, user name, order date/time, ordered item, delivery quantity, delivery time, price, and seller 3 information (name, address, telephone number, and facsimile number).

If the status of the order receipt information indicates order cancellation, the main server 81 generates e-mail confirming the order cancellation and sends it to the user 4 and seller 3. This e-mail contains information such as order cancellation reason, order number, user name, order date/time, ordered item, delivery quantity, delivery time, price, and seller 3 information (name, address, telephone number, and facsimile number).

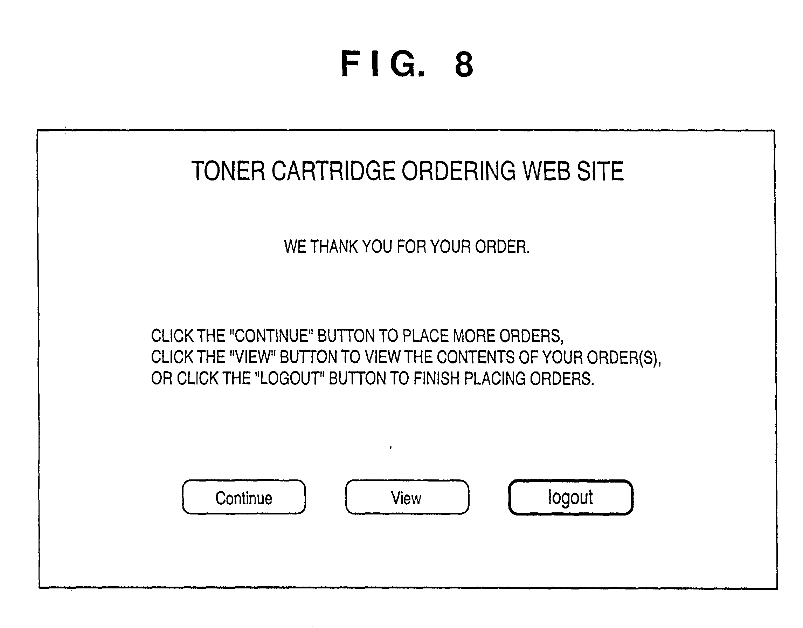

This ends the ordering sequence for toner cartridges. However, after the user 4 sends the order confirmation in Step S5, the monitor of the user 4's terminal 41 displays a screen such as the one shown in FIG. 8 for selecting among continuing ordering, viewing order details again, and finishing ordering (logout) although this screen is not shown in FIG. 4. When the user 4 presses a [logout] button, the connection between the main server 81 and terminal 41 is cut off.

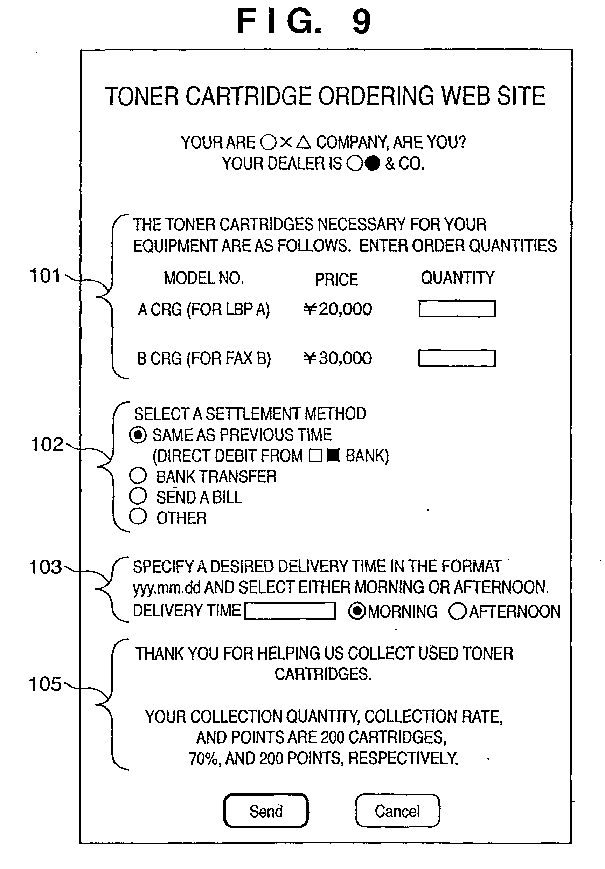

According to the present invention, if the user has already been registered for the collection service at the time of log-in in Step S1, the main server 81 may supply an ordering screen such as the one shown in FIG. 9 to the terminal 41 in Step S2. Specifically, the lower part of the order screen shown in FIG. 9 contains a display section 105 for expressing appreciation for cooperation in collection and indicating the progress of collection while the lower part of the ordering screen shown in FIG. 6 contains the collection service registration section 104. The user 4 can see the current collection quantity, collection rate, points, etc. from this display section 105. The collection points, which are determined according to the progress of collection such as the collected quantity or collection rate, will be used to provide price reduction information, goods commensurate with collected points, or other services to the user and will facilitate the collection operation as part of environmental measures.

In this way, the user 4 can easily order toner cartridges compatible with the equipment he/she uses without the need to select the suitable ones from among a great variety of toner cartridges. This sharply reduces the possibility of ordering wrong toner cartridges, and thus saves the labor or the like of returning toner cartridges ordered by mistake. Furthermore, since the ordering screen displays prices relevant to the given user 4, user 4 can quickly see the cost needed to buy toner cartridges.

On the part of the seller 3, since prices can be presented specifically to user 4, it is possible to facilitate the sale via the Internet 100, enhancing the efficiency of operations. Furthermore, the seller 3 can save the labor of handling returned products due to wrong orders.

### [Main-server processing]

Typical processing performed by the main server 81 will be described next.

### ● Order processing

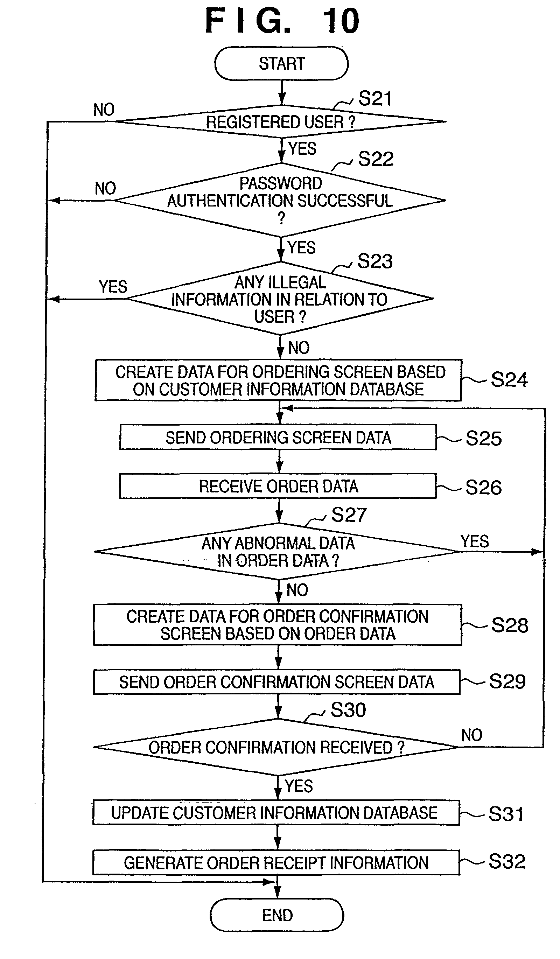

FIG. 10 is a flowchart showing an example of order processing. It corresponds to the ordering sequence shown in FIG. 4. The processes of the steps in the flowchart of FIG. 10 are carried out as the CPU 1501 executes processes based on the program code stored in the main storage or auxiliary storage of the main server 81.

When the user ID and password is received from the user 4, it is judged in Step S21 whether the user is a registered user and password authentication is performed in Step S22, based on the customer information database. If the user is found to be a registered user and password authentication is successful, it is judged in Step S23 whether there is any illegal information about the user 4. If there is no illegal information, HTML data for the ordering screens is generated in Step S24. Specifically, the list 101 and selection section 102 shown in FIGS. 6 and 9 are generated according to the user ID, and then it is determined which to display, the collection service registration section 104 shown in FIG. 6 or the display section 105 shown in FIG. 9. The HTML data for the ordering screens generated in this way is sent to the user 4 in Step S25.

The processing is terminated in any of the following cases: the user is not a registered user, password authentication fails, and there is illegal information about the user 4.

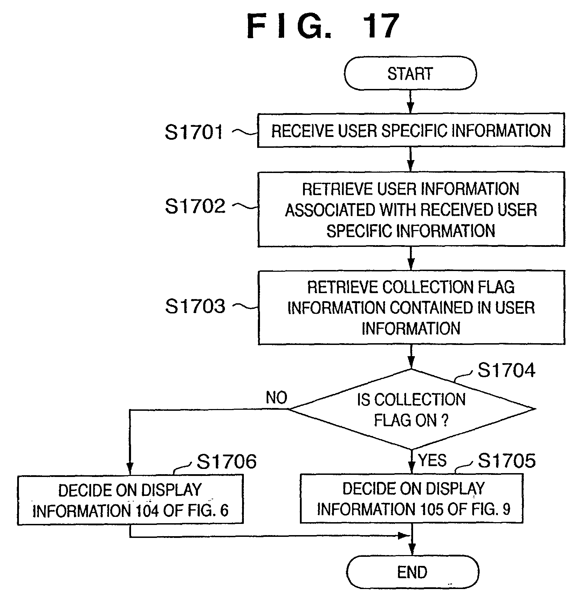

Now description will be given, with reference to FIG. 17, about the process of determining which display information to send to the terminal 41, such as the one shown in FIG. 6 or such as the one shown in FIG. 9. The processes of the steps in the flowchart of FIG. 17 are carried out as the CPU 1501 executes processes based on the program code stored in the main storage or auxiliary storage of the main server 81.

In S1701, the main server 81 receives user specific information sent from the terminal 41 via the Internet or the like.

In S1702, the main server 81 searches for and retrieves user information according to the received user specific information.

In S1703, the collection flag information contained in the user information is searched for and retrieved. The user information and collection flag are the ones described earlier and stored and managed in the DB 8.

In S1704, the main server 81 judges whether the collection flag information retrieved in S1703 is on or off. If the collection flag information is on, this means that the user has expressed, via the user interface, his/her intention to use the collection service shown in FIG. 6 and that information to this effect has been sent to the main server 81 and is managed there. On the other hand, if the collection flag information is off, this means that the user has not yet expressed his/her intention to use the collection service to the main server 81.

If the answer in S1704 is Yes, display information which corresponds to 105 in FIG. 9 is selected or generated in S1705 as part of the display information to be sent from the main server 81 to the terminal 41.

On the other hand, if the answer in S1704 is No, display information which corresponds to 104 in FIG. 6 is selected or generated and decided in S1706 as part of the display information to be sent from the main server 81 to the terminal 41. The information decided on in S1705 or S1706 forms part of the display information to be sent to the user's terminal.

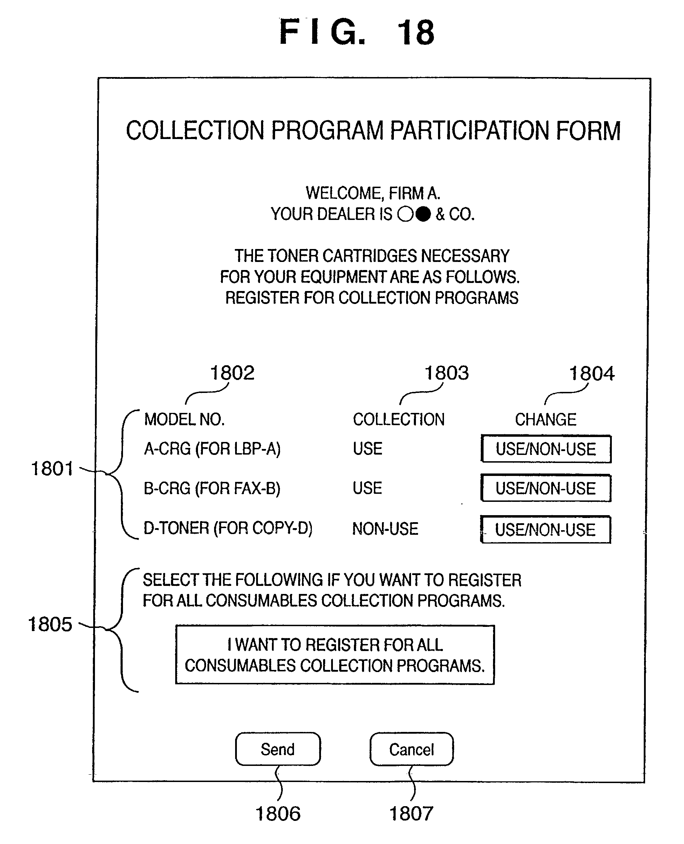

A display example different from that in FIG. 6 is shown in FIG. 18. The display example in FIG. 16 allows the user to make more advanced settings when deciding whether to use collection service for each order or each product. This display information is generated by the main server 81, sent to the terminal 41, and displayed there.

In FIG. 18, reference numeral 1801 denotes a display section which corresponds to 104 shown in FIG. 6. Collection flag information is displayed for each product (each item of the consumables) purchased by the user.

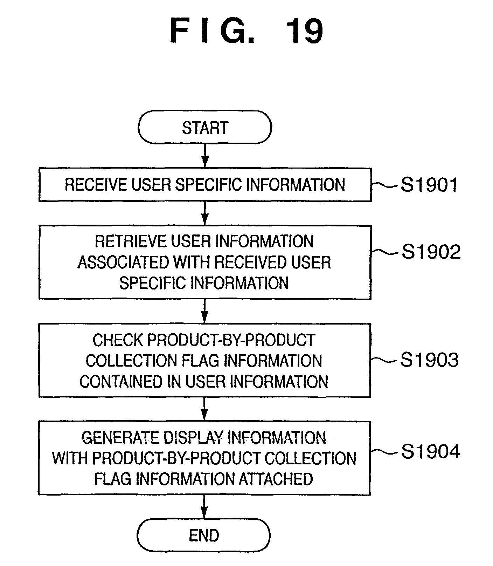

The process of generating the information in 1801 will be described by using the flowchart of FIG. 19. The processes of the steps in the flowchart of FIG. 19 are carried out as the CPU 1501 executes processes based on the program code stored in the main storage or auxiliary storage of the main server 81.

In S1901, the main server 81 receives user specific information sent from the terminal 41 via the Internet of the like.

In S1902, the main server 81 searches for and retrieves user information related to the received user specific information.

In S1903, the contents of the product-by-product collection flag information contained in the user information retrieved in S1902 are checked. The contents of the collection flag information here indicate whether the user intends to use the collection service.

In S1904, the section 1801 in FIG. 18 is generated as display information together with the collection flag information for each product.

The information decided on in S1904 forms part of the display information represented by the display example of FIG. 18.

The possible cases in which a display such as the one shown in FIG. 18 is provided include, as is the case with FIG. 6, when (1) the user has not yet registered for the collection service, (2) the user has registered for the collection service, but wants to cancel the registration, or (3) the user wants to decide whether to use the collection service, separately for each order or each product. The interface function provided by such a display is especially useful for case (3) above.

Returning to the description of the processing in FIG. 10, when order data is received in Step S26, it is judged in Step S27 whether or not the order data contains abnormal data. If it does, the processing returns to Step S25. If it does not, the HTML data for the ordering screen shown in FIG. 7 is generated in Step S28 and sent to the user 4 in Step S29.

Next, in Step S30, it is judged whether data indicating confirmation of the order was received. If data indicating cancellation was received, the processing returns to Step S25. If data indicating confirmation of the order was received, the customer information database (specifically, order history, collection flag, etc.) is updated in Step S31 and the order receipt information described above is generated in Step S32.

### ● Shipment processing

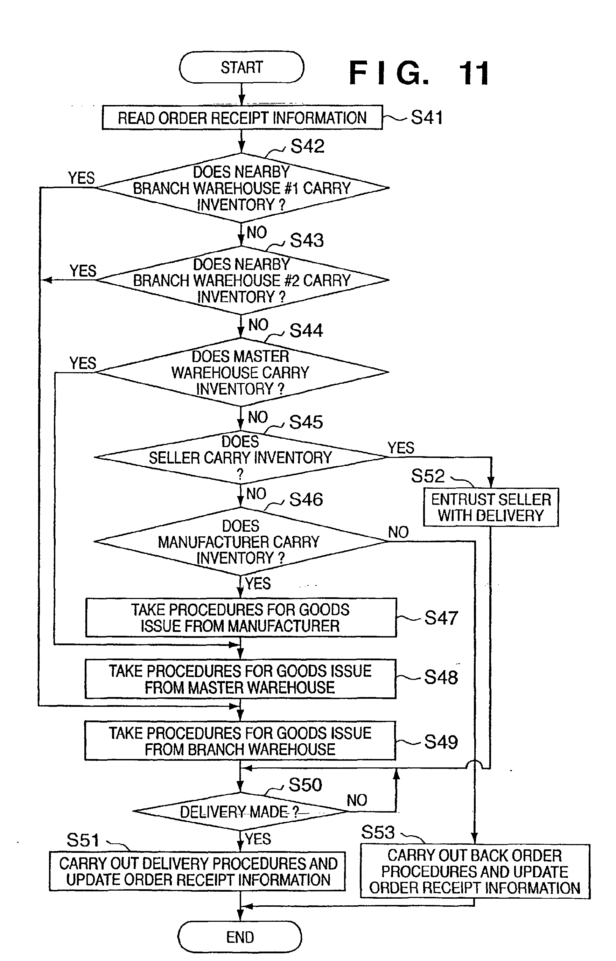

FIG. 11 is a flowchart showing an example of shipment processing based on order receipt information. The processes of the steps in the flowchart of FIG. 11 are carried out as the CPU 1501 executes processes based on the program code stored in the main storage or auxiliary storage of the main server 81.

In Step S41, one piece of order receipt information is read in. Then, based on the user ID, ordered item, and order quantity recorded in the order receipt information, inventory checks are made in Steps S42 to S46. Specifically, the inventory of each node is checked in the order: the nearby branch warehouse #1, nearby branch warehouse #2, master warehouse 5, seller (sales representative) 3 associated with the user ID, and manufacturer 1. Then, procedures are taken for a goods issue from the node nearest to the user 4.

For example, if the manufacturer 1 carries inventory while other nodes do not, procedures are taken for goods issues from the manufacturer 1, master warehouse 5, and branch warehouse 6 in this order in Steps S47 to S50. Needless to say, these goods issue procedures are taken in sync with the flow of toner cartridges.

In Step S50, based on the information received from the mobile terminal 62 of the expediter of the distributor, it is judged whether delivery has been made in relation to the order receipt information. If it has been, delivery procedures are carried out and the order receipt information is updated (e.g., a Delivered flag is turned on) in Step S51.

If the branch warehouses 6 and master warehouse 5 do not carry inventory and the seller 3 does, delivery is entrusted to the seller 3 in Step S52. In response to the request, the seller 3 instructs, for example, a serviceman, to make a delivery. In that case, it is judged in Step S50 whether delivery has been made in relation to the order receipt information, based on the information received from the mobile terminal 32 of the serviceman.

If the manufacturer 1 does not carry inventory either, back order procedures are carried out in Step S53 and the order receipt information is updated.

### ● Collection processing

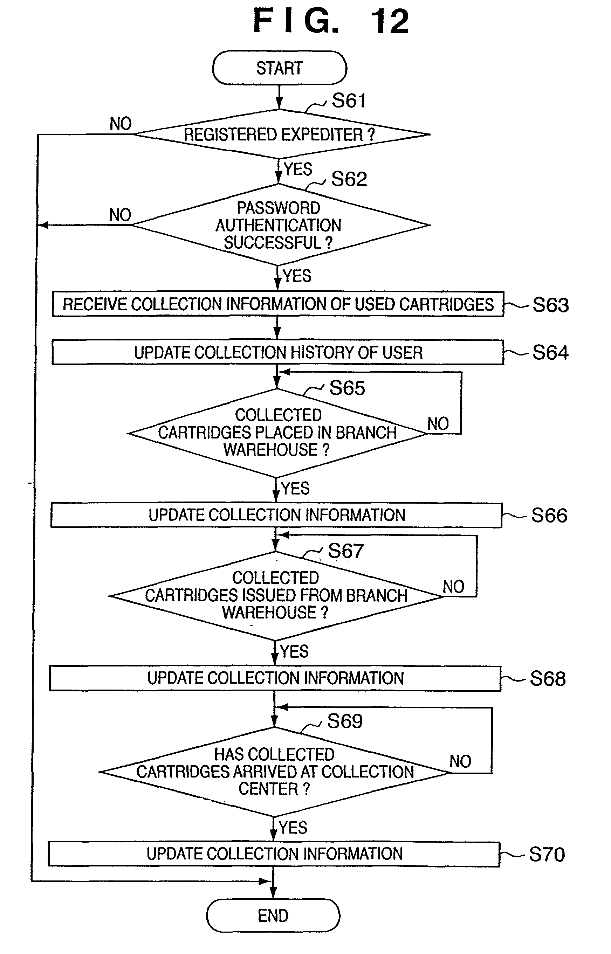

FIG. 12 is a flowchart showing an example of collection processing based on the order receipt information received from the terminal 41 of the user. The processes of the steps in the flowchart of FIG. 12 are carried out as the CPU 1501 executes processes based on the program code stored in the main storage or auxiliary storage of the main server 81.

The expediter who delivers toner cartridges references the collection flag in the order receipt information. If the collection flag is on, used toner cartridges are collected at the time of delivery. The expediter accesses the main server 81 using the mobile terminal 62 (S61 and S62), and sends delivery information and collection information associated with the order receipt information (S63). The collection information contains the model numbers and quantities of the collected toner cartridges associated with the collection date and order receipt information.

The expediter (deliveryman) references the collection flag as described above by viewing information displayed on the display unit of his/her portable terminal. The information displayed on the display unit is supplied by being sent from the main server 81 in FIG. 3 to the portable terminal of the expediter.

The information displayed on the portable terminal of the expediter is based on user information that contains at least order quantity, desired delivery time, and flag information as to whether to use the collection service, which have been entered via a user interface (FIG. 6 or 9) according to user operation.

When the user information contains information about desired delivery time and flag information as to whether to use the collection service, the main server 81 can easily let the expediter know on the day of the delivery whether the user wants collection, by sending the display screen information to the expediter (distribution ID) identified by referring to the DB 8, in sync with the desired delivery time of the user. In addition to the approach in which the main server 81 sends the user information to the portable terminal of the expediter, the present invention can also adopt an approach in which the main server 81 sends the user information once to a distribution control computer which controls distribution and then the distribution control computer sends it to the portable terminal of the expediter. The distribution control computer here corresponds to a computer installed at the headquarters of the delivery agent or the terminal of the seller.

On the other hand, apart from the transmission of the user information to the expediter, when toner cartridges are sold, the main server 81 generates a shipping/collection number (ticket number) using the same number as the order receipt number issued in advance.

FIG. 20 shows how shipping/collection numbers are stored/managed in the DB 8. As shown in FIG. 20, the stored/managed data include shipping/collection number, product name, product number, delivery date, collection flag, expected collection date, collection date, Collection Completed flag, and other information for each user ID.

The first four digits (e.g., "AA01") in the shipping/collection numbers ("AA01-1" to "AA01-3") vary with the order, meaning that "AA01" and "AA02" belong to different orders. The last digit ("1" to "3" in "AA01-1" to "AA01-3") identifies a product. The use of the shipping/collection number saves labor at the time of collection, for example, sparing the user the trouble of issuing a new ticket and the expediter the trouble of data entry, as described above. Also, since shipment and collection are managed by the same ticket number or the like, the collection rate for each user can be managed easily, and so forth.

The setting of the collection flag is based on the user's intension as to whether to use the collection service specified for each product via the user interface shown in FIG. 18. If the intention as to whether to use the collection service has been specified via the user interface shown in FIG. 6, it is understood that all the goods are to be collected at once or not to be collected at all. The collection flag information is sent from the terminal 41 to the main server 81 in a manner similar to the one described above.

Also, the collection rate described above is calculated for each user from information about the quantity of goods (consumables) shipped to the user by the main server 81 based on information such as the one shown in FIG. 20 and about the quantity collected out of the shipped products. A display example of the calculated collection rate is shown in 105 in FIG. 9 or 104 in FIG. 6

The expected collection date will be described later. The collection date is the date on which collection was actually performed. The Collection Completed flag indicates whether collection was actually performed.

Upon receiving the collection information, the main server 81 updates the collection history for the user ID in the order receipt information in Step S64. Then, when goods receipt information of the collected cartridges is received from the terminal 61 of the branch warehouse 6 in Step S65, the main server 81 updates the collection information in Step S66. When goods issue information of the collected cartridges is received from the terminal 61 of the branch warehouse 6 in Step S67, the main server 81 updates the collection information in Step S68. When arrival information of the collected cartridges is received from the terminal 71 of the collection center 7 in Step S69, the main server 81 updates the collection information in Step S70 (e.g., turns on the Collection Completed flag).

### ● Preparation of recycling plan

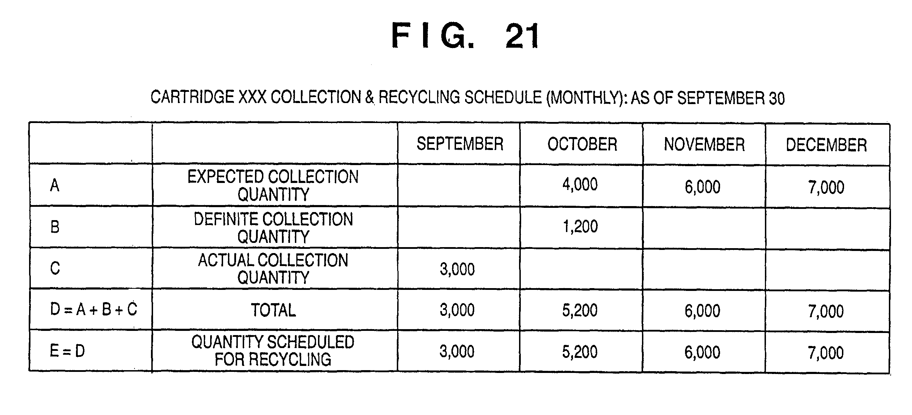

FIG. 21 shows an example of a recycling schedule table. The main server 81 calculates the expected daily collection quantity, based on the purchase history (shipment arrival date/time) of toner cartridges yet to be collected, product-specific sale-to-collection period, and collection flag. The calculation is performed for each user. Suppose, for example, a user purchased toner cartridges XXX on September 1. If the product-specific sale-to-collection period, which is the average of the periods between the date of toner cartridge sale to the user and the date of collection, is 90 days, it is expected that the toner cartridges will be collected on December 1. This is made possible by managing sales and collection by the same number. According to this method, it is possible to calculate the expected collection quantity on a daily basis by estimating the collection dates of all the toner cartridges yet to be collected with respect to the users whose collection flag is set to Yes. Also the accuracy of prediction can be further improved by calculating the product-specific sale-to-collection periods of each customer.

The expected collection quantities determined in this way can be used effectively in drawing up medium-term plans. For example, recycling plants can work out plans for arranging for personnel, securing work areas, purchasing necessary equipment, arranging for necessary supplies/tools, arranging for necessary parts, securing a storage site for recycled goods, etc., based on a medium-term production plan. Also, in warehouses (master and branch whorehouses), plans for storage sites can be drawn up by making out the quantity of collected goods in advance.

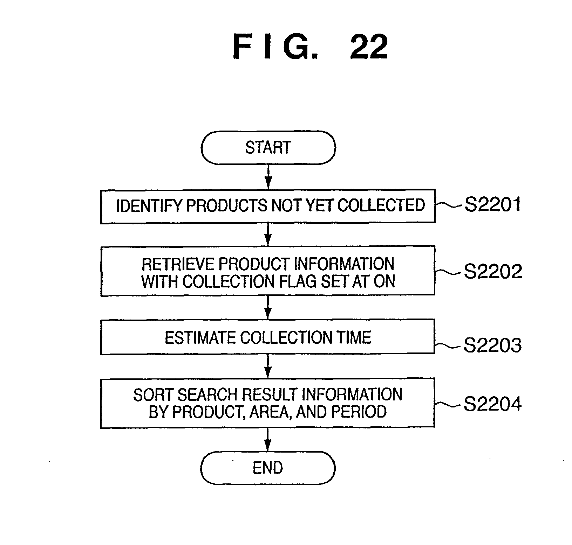

FIG. 22 shows a flowchart of detailed processes for generating schedule information such as the one shown in FIG. 21. The processes of the steps in the flowchart of FIG. 22 are carried out as the CPU 1501 executes processes based on the program code stored in the main storage or auxiliary storage of the main server 81. These processes are performed through collaboration between the DB 8 storing various data and the main server 81.

In S2201, a search is carried out by referencing Completed flags managed being associated with shipping/collection ticket numbers which in turn are managed being associated with "product names and model numbers" not yet collected.

In S2202, concerning the products not yet collected, it is judged whether they are associated with collection service registration information, and the products associated with collection service registration information are extracted and identified.

In S2203, based on "product name and model number" and "product-specific sale-to-collection period" in the product information database, the time when consumables are expected to be used up is estimated.

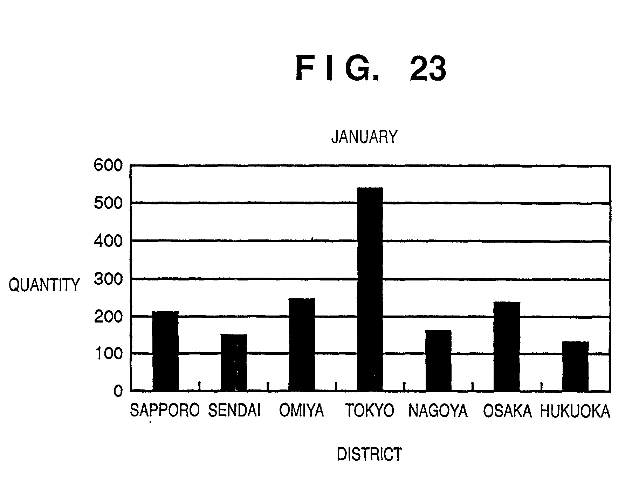

In S2204, the estimates calculated in S2203 are further classified by product, by place, and by period. FIG. 23 shows estimated quantity of collection by district for the month of January. This data has been extracted from the information obtained in S2103 of FIG. 22 according to information about districts and periods. Incidentally, the method of extraction is not limited to the one shown in FIG. 23. The present invention allows for a method based on classification by period in addition to classification by product and district.

In the process of S2204, "product name and model number" information contained in the product information database is used for classification by product. The classification by district is based on the "address" information contained in the user information associated with individual products. The classification by period is used to specify a period for the estimates calculated in S2103. This period can be specified freely. For example, if the period is specified by month, a monthly collection schedule can be set up as shown in FIG. 21. Incidentally, according to the present invention, the period can be specified not only by month, but also by day, by week, or by any desired period (for example, 2001/12/01 to 2001/12/17).

Furthermore, the host server 81 can determine the expected delivery dates at the collection center and calculate definite daily collection quantities based on the collection dates when collection from the user was actually performed.

By calculating definite collection quantities during a given period in this way, the main server 81 may send and provide information about a plan such as the one shown in FIG. 21 to the terminal of the collection center, which then can improve the accuracy of prediction in recycling plans.

When the definite collection quantity is known, it is possible to draw up short-term plans. For example, recycling plants can determine working hours (presence or absence of overtime work, etc.) and establish effective working procedures (what item to start with). If it is known on May 31, for example, that the quantities to be collected are 1500 on April 1, 1000 on April 2, and 500 on April 3, a calculation program of the main server 81 can generate a production plan for a recycled product by leveling out the quantities to 1000 on April 1, 1000 on April 2, and 1000 on April 3. Also, shipping trucks for recycled products can be arranged properly in advance. Warehouses (master and branch whorehouses) can also make proper arrangements for shipping trucks for recycled products.

### [Concrete examples of office consumables]

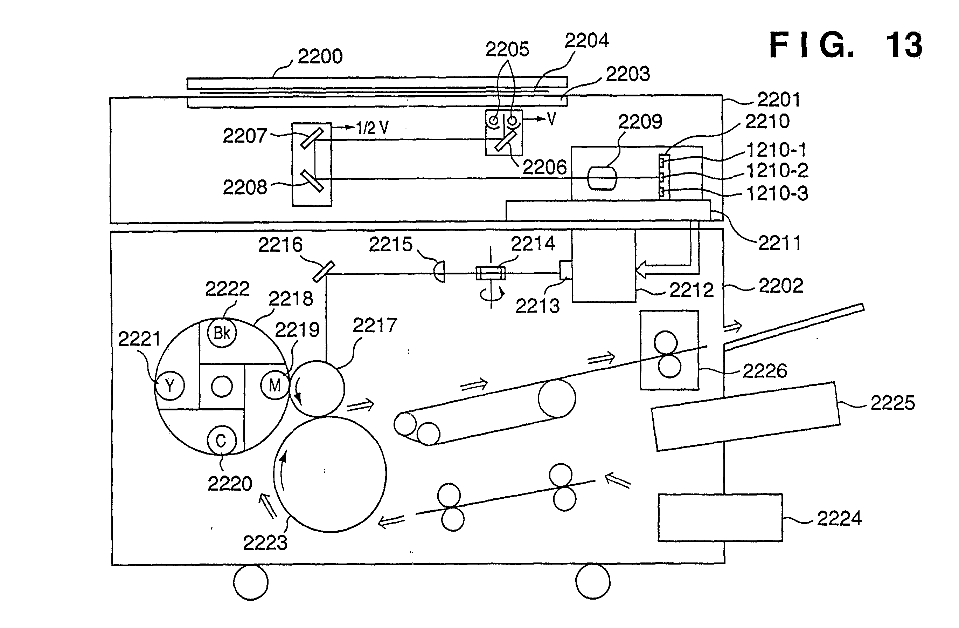

FIG. 13 is a schematic diagram showing an example configuration of a laser beam printer (LBP) equipped with office consumables according to this embodiment.

In FIG. 13, an image scanner 2201 reads an original image and performs digital image processing on it. A printer 2202 forms an image on recording paper, corresponding to the original image read by the scanner 2201, and outputs it.

In the image scanner 2201, reference numeral 2200 denotes a platen cover and 2203 denotes a platen glass. An original 2204 is placed with its recording surface turned to the bottom of the figure and is secured by the platen cover 2200. Light outputted from a fluorescent lamp 2205 is reflected by the original 2204, led to mirrors 2206, 2207, and 2208, and focused on a linear CCD image sensor (hereinafter referred to as the CCD) 2210 through a lens 2209, which is fitted with an infrared cut filter. The CCD 2210 reads the reflected light from the original 2204 by separating it into red (R), green (G), and blue (B) and sends the resulting analog image signals to an image processor 2211. The entire original 2204 is scanned when a unit containing the fluorescent lamp 2205 and mirror 2206 and a unit containing the mirrors 2207 and 2208 are caused to move mechanically at velocities of V and V/2, respectively, in the sub scanning direction orthogonal to the CCD 2210.

The CCD 2210 consists, for example, of approximately 7500 pixels each for RGB colors, arranged in three lines (1210-1 to 1210-3) of light-sensitive pixels. It can scan the shorter 297-mm dimension of an A3-size original at a resolution of 600 dpi. If it is necessary to scan the shorter 297-mm dimension of an A3-size original only at a resolution of 400 dpi, a one-dimensional image sensor with approximately 5000 pixels each for RGB colors will do.

The image processor 2211 converts the analog image signals outputted from the CCD 2210 into digital image signals, generates images in color components Yellow (Y), Magenta (M), Cyan (C), and Black (BK) which correspond to the print toner colors, and sends the images to the printer 2202. One of the YMCBK color component images is sent to the printer 2202 per scan of the original (per sub scan) by the image scanner 2201. Therefore, through four scans of the original, image signals of the four color components are sent to the printer 2202 in sequence to complete one print. However, if the image processor 2211 has necessary and sufficient memory, image signals obtained by one scan can be stored in the memory, eliminating the need for the remaining three scans.

The image signals of the YMCBK color components sent out by the image processor 2211 in sequence in this way are input into a laser driver 2212 in the printer 2202. The laser driver 2212 causes a laser diode 2213 to emit light according to the inputted image signals. Laser light emitted from the laser diode 2213 scans a photoconductive drum 2217 via a polygon mirror 2214, f-θ lens 2215, and mirror 2216, and forms an electrostatic latent image on the photoconductive drum 2217.

The electrostatic latent image formed on the photoconductive drum by the laser light is developed by developing units 2219 to 2222 which have Yellow, Magenta, Cyan, and Black toners. Specifically, four developing units 2219 to 2222 contact the photoconductive drum 2217 one after another to carry out development using the color toners.

Recording paper supplied by paper a cassette 2224 or 2225 is wound around a transfer drum 2223 by electrostatic forces and the toner image on the photoconductive drum 2217 is transferred. In the case of recording using four color toners, four rotations of the transfer drum 2223 transfers the color toners in overlays to the recording paper. Then the recording paper is removed from the transfer drum 2223, the toner image is fixed by a fixing unit 226, and the recording paper is ejected.

In such an LBP, the photoconductive drum 2217, toner or toner cartridges contained in the developing units 2219 to 2222, and recording paper contained in the paper cassettes 2224 and 2225 are office consumables.

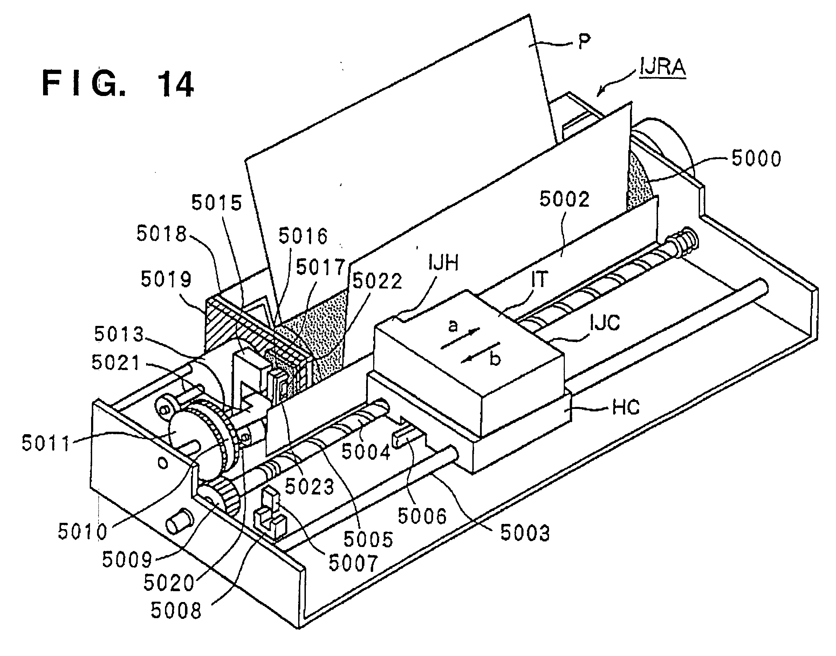

FIG. 14 is a schematic diagram showing an example configuration of an ink-jet printer (IJRA) equipped with office consumables according to this embodiment.

In FIG. 14, a carriage HC engaged with a helical groove 5005 of a lead screw 5004 which rotates via power transmission gears 5011 and 5009 along with the forward and reverse rotation of a drive motor 5013 has a pin (not shown) and reciprocates in the directions of arrows a and b. The carriage HC carries a ink-jet cartridge IJC.

Reference numeral 5002 denotes a paper bail, which presses recording paper P against a platen 5000 along the travel direction of the carriage HC. Reference numerals 5007 and 5008 denote photosensors which serve as home position detecting means for checking, in order to switch the rotational direction of the motor 5013, whether a lever 5006 of the carriage HC is located in the area where the sensors are mounted. Reference numeral 5016 denotes a support member for supporting a capping member 5022 which caps the front of a recording head IJH. Reference numeral 5015 denotes a suction means for sucking on the inside of the cap to recover the recording head IJH through an opening 5023 in the cap.

Reference numeral 5017 denotes a cleaning blade while 5019 denotes a member which allows the blade to move back and forth. They are supported on a body support plate 5018. The type of the cleaning blade is not limited to the one described above, and it goes without saying that a known cleaning blade can be applied to this embodiment. Reference numeral 5021 denotes a lever for starting suction in suction recovery. It moves together with movement of a cam 5020 engaged with the carriage HC. A driving force from the drive motor 5013 is controlled by a transmission means such as clutch engagement and disengagement.

According to the above configuration, the capping, cleaning, and suction recovery are performed by the action of the lead screw 5004 when the carriage HC is within an area on the home position side so that desired processes can be carried out at corresponding locations. However, desired actions may be performed with known timings.

In such an IJRA, the ink-jet cartridge IJC or ink in it constitutes office consumables.

### Other embodiments

Needless to say, the object of the present invention can also be attained by a storage medium (or recording medium) containing the software program code that implements the functions of the above embodiment: it is supplied to a system or apparatus, whose computer (or a CPU or MPU) then reads the program code out of the storage medium and executes it. In that case, the program code itself read out from the storage medium will implement the functions of the above embodiment, and the storage medium which stores the program code will constitute the present invention. The functions of the above embodiment may be implemented not only by the program code read out and executed by the computer, but also by part or all of the actual processing executed, in accordance with instructions from the program code, by an OS (operating system) running on the computer.

Furthermore, the functions of the above embodiment may also be implemented by part or all of the actual processing executed by a CPU or the like contained in a function expansion card inserted in the computer or a function expansion unit connected to the computer if the processing is performed in accordance with instructions from the program code that has been read out of the storage medium and written into memory on the function expansion card or unit.

In the case where the present invention is applied to the storage medium mentioned above, the storage medium will store the program code that corresponds to the above-described sequence in FIG. 4; the program code which correspond to the flowcharts in FIGS. 10 to 12, 16, 17, 19, and 22; and/or the program code which creates the data for the screens shown in FIGS. 5 to 9, and 18.

As described above, the present invention can centrally control circulation of office consumables. In particular, it allows efficient control of the processes from sales of business consumables to collection. Furthermore, it provides users a mechanism for performing operations from purchase of office consumables to collection efficiently.

## Claims

1. A collection method which provides a screen for a logged-in user and allows the user to specify collection of used goods according to said screen,
**characterized in that** said screen contains:
an item for receiving orders for the goods from said user; and
an item for said user to specify whether to use collection of the used goods.

2. The collection method according to Claim 1,
**characterized in that** said screen contains data which indicates the progress of collection of used goods in the case of the user who has specified said collection.

3. The collection method according to Claim 1,
**characterized in that** used goods are collected when ordered goods are delivered, if said collection is specified.

4. The collection method according to Claim 1,
**characterized in that** an Internet is used for said log-in.

5. A sales system which comprises: log-in means for making a user who intends to order goods log-in; supply means for supplying an ordering screen for the logged-in user; and a reception means for receiving order information which is based on said ordering screen,
**characterized in that** said supply means supplies said user an ordering screen which contains an item for said user to specify whether to use collection of used goods.

6. The sales system according to Claim 5,
**characterized in that** said supply means includes data that indicate the progress of collection of used goods in said ordering screen in the case of a user who has specified said collection.

7. The sales system according to Claim 5, **characterized in that** said user accesses said sales system via an Internet.

8. A program for implementing a sales system which makes a user who intends to order goods log-in, supplies an ordering screen for the logged-in user, and receives order information which is based on said ordering screen,
**characterized in that** said program comprises a step of supplying said user an ordering screen which contains an item for said user to specify whether to use collection of used goods.

9. A medium containing program code of a sales system which makes a user who intends to order goods log-in, supplies an ordering screen for the logged-in user, and receives order information which is based on said ordering screen,
**characterized in that** said program code comprises at least code for a step of supplying said user an ordering screen which contains an item for said user to specify whether to use collection of used goods.

10. An ordering method for logging-in to a designated server and ordering desired goods according to an ordering screen provided by said server,
**characterized in that** said ordering screen contains a list of goods compatible with equipment used by an orderer.

11. The ordering method according to Claim 10,
**characterized in that** said ordering screen further contains price information corresponding to the listed goods and said orderer.

12. The ordering method according to Claim 11,
**characterized in that** said ordering screen is generated based on databases which record at least the orderer, equipment used by the orderer, goods compatible with the equipment, and price information corresponding to said goods and said orderer.

13. The ordering method according to Claim 10,
**characterized in that** said orderer accesses said server via an Internet.

14. The ordering method according to Claim 10,
**characterized in that** said goods include: toners; toner cartridges; consumable parts; and ink, and said consumable parts include at least photoconductor drums and photoconductor units.

15. A sales method which provides an ordering screen for a logged-in user and allows a user to order desired goods according to said ordering screen
**characterized in that** said ordering screen contains a list of goods compatible with equipment used by said user.

16. The sales method according to Claim 15,
**characterized in that** said ordering screen further contains price information corresponding to the listed goods and said user.

17. The sales method according to Claim 15,
**characterized in that** said ordering screen is generated based on databases which record at least the user, equipment used by the user, goods compatible with the equipment, and price information corresponding to said goods and said user.

18. The sales method according to Claim 15,
**characterized in that** an Internet is used for said processes of logging-in, supplying the ordering screen, and placing orders.

19. The sales method according to Claim 15,
**characterized in that** said goods include: toners; toner cartridges; consumable parts; and ink, and said consumable parts include at least photoconductor drums and photoconductor units.

20. A sales system which comprises: log-in means for making a user who intends to order goods log-in; supply means for supplying an ordering screen for the logged-in user; and a reception means for receiving order information which is based on said ordering screen,
**characterized in that** said supply means supplies said user an ordering screen which contains a list of goods compatible with the equipment used by said user.

21. The sales system according to Claim 20,
**characterized in that** said supply means supplies said user an ordering screen which further contains price information corresponding to the listed goods and said user.

22. The sales system according to Claim 20,
**characterized in that** said supply means generates said ordering screen based on databases which record at least the user, equipment used by the user, goods compatible with the equipment, and price information corresponding to said goods and said user.

23. The sales system according to Claim 20,
**characterized in that** said user accesses said sales system via an Internet.

24. A program for implementing a sales system which makes a user who intends to order goods log-in, supplies an ordering screen for the logged-in user, and receives order information which is based on said ordering screen,
**characterized in that** said program comprises a step of supplying said user an ordering screen which contains a list of the goods compatible with equipment used by said user.

25. A medium containing program code of a sales system which makes a user who intends to order goods log-in, supplies an ordering screen for the logged-in user, and receives order information which is based on said ordering screen,
**characterized in that** said program code comprises at least code for a step of supplying said user an ordering screen which contains a list of goods compatible with the equipment used by said user.

26. An information processing apparatus comprising sending means for transmission to a terminal connected via a communications line, **characterized in that** display screen information containing an input field for entering ordering information of goods and an input field for entering collection information as to whether said goods be collected is sent to said terminal.

27. The information processing apparatus according to Claim 26,
**characterized in that** said sending means sends said ordering information and said collection information from a terminal which has received said display screen information, to a computer which manages the distribution of said goods.

28. The information processing apparatus according to Claim 27,
**characterized in that** said display screen information contains information for use in setting the date on which said goods will be delivered, that said computer which manages distribution is a portable terminal owned by a deliveryman who delivers goods identified by said ordering information, and that said sending means sends said ordering information and said collection information to said portable terminal according to said date entered and sent via a display screen based on said display screen information.

29. The information processing apparatus according to Claim 26,
**characterized by** further comprising:
storage means for storing said collection information sent, via said communications line, from a terminal which has received said display screen information; and
estimation means for estimating expected collection quantity of said goods according to said collection information stored and accumulated in said storage means.

30. The information processing apparatus according to Claim 29,
**characterized in that** said storage means stores information about the average time required for said goods to be used up, and that said estimation means calculates said expected collection quantity according to said average time information and said collection information.

31. The information processing apparatus according to Claim 26,
**characterized in that** said display screen information contains information about the progress of collection from each user.

32. The information processing apparatus according to Claim 29,
**characterized in that** said storage means stores collection performance information which indicates that said goods have been actually collected; and
said information processing apparatus further comprises calculation means for calculating a collection rate, based on the order quantity of said goods identified by said ordering information sent from said terminal as well as on said collection performance information.

33. The information processing apparatus according to Claim 32,
**characterized in that** said sending means sends screen information obtained by adding said collection rate to said screen information.

34. The information processing apparatus according to Claim 29,
**characterized in that** said goods include: toners; toner cartridges; consumable parts; and ink; and said consumable parts include at least photoconductor drums and photoconductor units.

35. An information processing apparatus which manages information about users' equipment and is connected to a plurality of terminals via communications lines,
**characterized in that** said information processing apparatus comprises identifying means for identifying the equipment owned by a user based on information specific to said user received from one of said terminals, and
generation means for generating display screen information for displaying information about the equipment owned by the user identified by said identifying means.

36. The information processing apparatus according to Claim 35,
**characterized in that** said identifying means identifies consumables compatible with said equipment, and that said generation means generates display screen information which contains information about identified consumables.

37. The information processing apparatus according to Claim 36,
**characterized in that** said generation means generates display screen information which contains collection information for specifying whether to use a collection service for collecting identified consumables.

38. The information processing apparatus according to Claim 37,
further comprising storage means for storing said collection information as collection flag information,
**characterized in that** said generation means generates information for specifying whether to use the collection service of consumables for said equipment according to collection flag information stored in said storage means.

39. The information processing apparatus according to Claim 35,
**characterized in that** said identifying means identifies price information for the identified equipment or identified consumables; and that said generation means includes said price information in the display screen information.

40. An information processing apparatus, **characterized by** comprising:
receiving means for receiving ordering information sent via the Internet; and
judgment means for judging, based on inventory information of the warehouse from which the goods identified by said ordering information can be transported in the shortest period corresponding to geographical information of the orderer identified by said ordering information received by said receiving means, whether said goods can be shipped from said warehouse.

41. A collection method using an information processing apparatus which sends information to a terminal connected via a communications line,
**characterized by** comprising a sending step of sending, to said terminal, display screen information which contains an input field for entering ordering information of goods and an input field for entering collection information as to whether said goods be collected.

42. A sales method using an information processing apparatus which manages information about users' equipment and is connected to a plurality of terminals via communications lines,
**characterized by** comprising:
an identification step of identifying the equipment owned by a user based on information specific to said user received from one of said terminals; and
a generation step of generating display screen information for displaying information about the equipment owned by the user identified in said identification step.

43. A sales method using an information processing apparatus,
**characterized by** comprising:
a receiving step of receiving ordering information sent via the Internet; and
a judgment step of judging, based on inventory information of the warehouse from which the goods identified by said ordering information can be transported in the shortest period corresponding to geographical information of the orderer identified by said ordering information, whether said goods can be shipped from said warehouse.

44. A program executed by an information processing apparatus,
**characterized by** comprising:
a sending step of sending display screen information to a terminal connected via a communications line, said display screen information containing an input field for entering ordering information of goods and an input field for entering collection information as to whether said goods be collected.

45. A program executed by an information processing apparatus which manages information about users' equipment and is connected to a plurality of terminals via communications lines, **characterized by** comprising:
an identification step of identifying the equipment owned by a user based on information specific to said user received from one of said terminals; and
a generation step of generating display screen information for displaying information about the equipment owned by the user identified in said identification step.

46. A program **characterized by** comprising:
a receiving step of receiving ordering information sent via the Internet; and
a judgment step of judging, based on inventory information of the warehouse from which the goods identified by said ordering information can be transported in the shortest period corresponding to geographical information of the orderer identified by said ordering information, whether said goods can be shipped from said warehouse.

47. A computer-readable storage medium for storing a program executed by an information processing apparatus
**characterized by** storing program code for executing a sending step of sending display screen information to a terminal connected via a communications line, said display screen information containing an input field for entering ordering information of goods and an input field for entering collection information as to whether said goods be collected.

48. A computer-readable storage medium for storing program code executed by an information processing apparatus which manages information about users' equipment and is connected to a plurality of terminals via communications lines,
**characterized by** storing program code for executing:
an identification step of identifying the equipment owned by a user based on information specific to said user received from one of said terminals; and
a generation step of generating display screen information for displaying information about the equipment owned by the user identified in said identification step.

49. A computer-readable storage medium,
**characterized by** containing program code for executing:
a receiving step of receiving ordering information sent via the Internet; and
a judgment step of judging, based on inventory information of the warehouse from which the goods identified by said ordering information can be transported in the shortest period corresponding to geographical information of the orderer identified by said ordering information, whether said goods can be shipped from said warehouse.

50. An information processing apparatus comprising sending means for sending information to a terminal connected via a communications line,
**characterized in that** said sending means sends display screen information to a user's terminal, said display screen information containing information about goods identified by information entered by said user via an ordering screen, and an input field for entering collection information as to whether said goods be collected.

51. A collection method using an information processing apparatus which sends information to a terminal connected via a communications line, **characterized by** comprising:
a sending step of sending display screen information to a user's terminal, said display screen information containing information about goods identified by information entered by said user via an ordering screen as well as an input field for entering collection information as to whether said goods be collected.

52. A program executed by an information processing apparatus,
**characterized by** comprising:
a sending step of sending display screen information to a user's terminal connected via a communications line, said display screen information containing information about goods identified by information entered by said user via an ordering screen, and an input field for entering collection information as to whether said goods be collected.

53. A computer-readable storage medium for storing a program code executed by an information processing apparatus,
**characterized by**:
storing program code for executing a sending step of sending display screen information to a user's terminal connected via a communications line, said display screen information containing information about goods identified by information entered by said user via an ordering screen and, an input field for entering collection information as to whether said goods be collected.
